# DEMANDE DE BREVET EUROPEEN

(11) **EP 4 438 276 A1**
(43) Date de publication de la demande: **02.10.2024**
(21) Numéro de dépôt: 24162925.2
(22) Date de dépôt: 12.03.2024
(51) Int. Cl.: B29C 70/08, B29C 70/54, B29C 33/38, B29C 70/00

(54) **PROCÉDÉ DE PRÉPARATION D'UN PANEAU STRATIFIÉ RENFORCÉ**

(30) Priorité: 28.03.2023 BE 202305234
(71) Demandeur: Hygi Panel, 5380 Fernelmont (BE)
(72) Inventeur: BONGIOVANNI, Lorenzo, 1190 Bruxelles (BE)
(74) Mandataire: Calysta NV

(57) **Abrégé**

L'invention concerne un procédé permettant la fabrication d'un panneau stratifié renforcé, comprenant les étapes suivantes, dans l'ordre: (a) fourniture d'une feuille de verre ayant une surface sensiblement plane et lisse, (b) dépôt d'une couche d'une première résine réticulable liquide sur ladite surface, ladite résine étant choisie parmi les résines polyesters isophtaliques, les résines polyesters orthophtaliques, les résines polyesters vinyliques (ou vinylesters) et leurs mélanges, (c) réticulation de ladite première résine, (d) application, sur ladite couche, d'un tissé de verre imprégné d'une deuxième résine réticulable liquide, (e) réticulation de ladite deuxième résine, et (f) démoulage du panneau stratifié obtenu.

## Description

### Domaine technique

La présente invention concerne un procédé amélioré de fabrication d'un panneau stratifié renforcé, notamment destiné à être utilisé comme revêtement de murs ou de plafonds, par exemple dans les secteurs de l'industrie agro-alimentaire, de la production de boissons, des laboratoires et des métiers de bouche, nécessitant un environnement professionnel parfaitement hygiénique et le respect de normes strictes (par ex., HACCP).

### Art antérieur

Il est déjà connu dans l'état de la technique de nombreux procédés différents pour fabriquer des panneaux stratifiés résistants/renforcés, destinés notamment à être utilisés comme revêtement muraux ou bien comme éléments de façades dans des véhicules de loisirs motorisés (par exemple, des « mobil-homes »).

Ces panneaux stratifiés renforcés comportent le plus souvent des fibres de verre (ils sont alors appelés « FRP » pour « fiber-reinforced panels »). Ces fibres sont communément intégrées dans le panneau sous forme d'un mat de verre pré-fabriqué (sous forme de rouleau par exemple) ou bien par leur pulvérisation/projection sur une surface (sous formes de fibres coupées/hachées), et mises en présence d'une résine liquide qui sera ensuite réticulée pour figer les fibres dans la résine et donner la résistance au stratifié final.

Cependant, ces panneaux laissent généralement apparaître à leur surface la présence de ces fibres de verre ce qui leur donne une esthétique peu avantageuse et une texture rugueuse qui les rend difficiles à nettoyer et propices à l'accroche des bactéries à leur surface.

Une des solutions développées par les fabricants de panneaux stratifiés renforcés, pour améliorer l'esthétique de ces panneaux, est de prévoir un texture décorative (par exemple, avec des motifs en relief ou une apparence de bois) qui est imprimée/embossée sur ladite surface et qui masque alors visuellement la présence des fibres à la surface. Toutefois, cette solution ne résout pas du tout les problèmes de nettoyabilité et d'accroche facilitée des bactéries, qui restent bien présents.

Ainsi, il serait d'un intérêt tout particulier de disposer d'un procédé permettant la fabrication d'un panneau stratifiée renforcé de fibres de verre et présentant, outre sa résistance mécanique globale, une surface externe (c'est-à-dire celle destinée à être la face tournée vers l'extérieur/le milieu environnant une fois le panneau posé) lui conférant une belle esthétique/brillance et ayant à la fois :
(i) une bonne résistance mécanique,
(ii) une bonne étanchéité,
(iii) une grande nettoyabilité,
(iv) un caractère bactériostatique, et
(v) un respect des normes ciblées.

De plus, les panneaux stratifiés renforcés existants sur le marché sont généralement de dimensions modestes (c'est-à-dire d'une longueur de l'ordre de 2 ou 3 mètres) ce qui génèrent certaines limitations quant à leur pose, sur des murs par exemple, qui ne peut être faite en un seul tenant et entraîne dès lors la présence de joints, rendant ladite pose plus longues et délicates et surtout, lesdits joints constitueront des endroits plus difficiles à nettoyer et où la saleté/les bactéries peuvent se loger plus facilement.

### Objectifs de l'invention

Un objectif de la présente invention est de surmonter les inconvénients de l'état de la technique, notamment ceux décrits ci-dessus.

En particulier, un objectif de l'invention est de fournir un procédé de fabrication d'un panneau stratifié renforcé, destiné notamment à revêtir des murs ou plafonds, possédant une surface externe (celle destinée à être la face tournée vers l'extérieur une fois le panneau posé) ayant une grande résistance notamment aux chocs.

Encore un autre objectif de l'invention est de fournir un procédé de fabrication d'un panneau stratifié renforcé, destiné notamment à revêtir des murs ou plafonds, possédant une surface externe parfaitement étanche.

Encore un autre objectif de l'invention est de fournir un procédé de fabrication d'un panneau stratifié renforcé, destiné notamment à revêtir des murs ou plafonds, possédant une surface externe d'esthétique agréable et parfaitement lisse.

Encore un autre objectif de l'invention est de fournir un procédé de fabrication d'un panneau stratifié renforcé, destiné notamment à revêtir des murs ou plafonds, possédant une surface externe répondant aux normes ciblées, en particulier aux normes strictes édictées dans l'industrie agro-alimentaire.

Encore un autre objectif de l'invention est de fournir un procédé de fabrication d'un panneau stratifié renforcé, destiné notamment à revêtir des murs ou plafonds, possédant une surface externe avec une excellente nettoyabilité.

Encore un autre objectif de l'invention est de fournir un procédé de fabrication d'un panneau stratifié renforcé, destiné notamment à revêtir des murs ou plafonds, possédant une surface externe présentant un caractère bactériostatique.

Encore un autre objectif de l'invention est de fournir un procédé permettant la fabrication d'un panneau stratifié renforcé dont la longueur peut aller jusqu'à 6 mètres.

Finalement, un autre objectif de la présente invention est de fournir un procédé de fabrication d'un panneau stratifié renforcé, qui soit facile à mettre en oeuvre, économique, apte à être automatisé et qui soit respectueux de l'environnement (« eco-friendly »).

### Description de l'invention

Pour atteindre les objectifs précités, il est prévu selon l'invention un procédé permettant la fabrication d'un panneau stratifié renforcé, comprenant les étapes suivantes, dans l'ordre :
a) fourniture d'une feuille de verre ayant une surface sensiblement plane et lisse,
b) dépôt d'une couche d'une première résine réticulable liquide sur ladite surface, ladite résine étant choisie parmi les résines polyesters isophtaliques, les résines polyesters orthophtaliques, les résines polyesters vinyliques (ou vinylesters) et leurs mélanges,
c) réticulation de ladite première résine,
d) application, sur ladite couche, d'un tissé de verre imprégné d'une deuxième résine réticulable liquide,
e) réticulation de ladite deuxième résine,
f) démoulage du panneau stratifié obtenu.

L'invention est ainsi basée sur une approche nouvelle et inventive. En effet, les inventeurs ont constaté, de manière surprenante, que les étapes spécifiques du procédé de l'invention, opérées dans l'ordre édicté, permet d'atteindre l'ensemble des objectifs. Ainsi, en particulier, en utilisant une feuille de verre ayant une surface plane et lisse afin d'y déposer une couche de résine spécifique qui est réticulée directement (c'est-à-dire avant toute étape ultérieure) en combinaison avec les autres étapes du procédé, il est possible d'obtenir pour le panneau stratifié final une surface externe lisse et brillante, d'esthétique très agréable, montrant un caractère bactériostatique, une excellente nettoyabilité et dont l'intégrité chimique et mécanique n'a pas été altérée par lesdites étapes ultérieures (notamment le dépôt du tissé de verre), la rendant ainsi totalement étanche et conservant les normes ciblées en vigueur (par exemple, des normes dans le domaine de l'agro-alimentaire ou le pharmaceutique).

D'autres caractéristiques, détails et avantages de l'invention ressortiront de la description et des figures données ci-après, à titre non limitatif. En particulier:

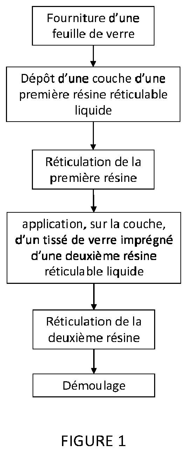

La figure 1 montre un organigramme illustrant les étapes du procédé selon l'invention.

Dans la présente description et les revendications, il est bien entendu que les termes « un », « une » ou « le » signifient « au moins un » et ne doivent pas être limités à « un seul », sauf indication contraire explicite, De plus, lorsqu'une plage de valeur est indiquée, les extrémités sont incluses. Finalement, toutes les valeurs intégrales et de sous-domaine dans une gamme/plage numérique sont expressément incluses comme si explicitement écrites.

Selon l'invention et tel qu'illustré à la figure 1, le procédé comprend tout d'abord une étape a) de fourniture d'une feuille de verre ayant une surface sensiblement plane et lisse. La feuille de verre selon l'invention peut être qualifiée par sa longueur, sa largeur et son épaisseur. La feuille de verre de l'invention présente avantageusement :
- une longueur qui peut aller de 1 mètre à 6 mètres, voire au-delà,
- une largeur qui peut aller de 60 centimètres à 2 mètres, et
- une épaisseur qui peut aller de 2 mm à 8 mm, de préférence entre 3 et 6 mm (une épaisseur trop faible la rendrait peut résistante mécanique, une épaisseur trop élevée la rendrait extrêmement lourde et donc difficile à manipuler/déplacer).

Par « verre », selon l'invention, on entend la définition communément admise de matériau amorphe ou semi-amorphe (incluant les vitrocéramiques par exemple). La composition et les propriétés optiques du verre selon l'invention ne sont pas particulièrement limitées.

Par la « surface» de la feuille de verre au sens de l'invention, on entend l'une des faces principales de ladite feuille, définie par la largeur et la longueur de la feuille, et celle destinée à recevoir la couche et le tissé de verre selon l'invention.

La feuille de verre selon l'invention a une surface sensiblement plane et lisse, ce qui exclut d'emblée les feuilles de verre dont la surface destinée à recevoir la couche, le tissé, etc. a été texturée, par exemple par traitement de matage à l'acide ou par sablage (verre maté ou sablé).

Par « tissé de verre» selon l'invention (également appelé « tissu de fibres de verre » ou en anglais, « glass roving »), on entend un assemblage/faisceau de fibres de verre agencées de manière structurée/tissée, par opposition au « mat de verre » dont les fibres sont disposées aléatoirement et qui sont de ce fait exclues de la définition de tissé de verre au sens de l'invention. Le tissé de verre peut être biaxial ou unidirectionnel. Le tissé de verre selon l'invention englobe également l'assemblage appelé communément dans le domaine « combi » ou « combi-mat », qui se compose d'un tissé de verre assemblé (ou cousu) à un ou plusieurs mat(s) de verre.

Il est entendu que, dans le procédé de l'invention, les étapes de dépôts, réticulations, applications, etc. sont effectuées de préférence sensiblement à l'horizontale, la feuille de verre jouant le rôle de substrat temporaire à ces étapes et étant « mobile » au besoin, ladite surface selon l'invention étant donc tournée vers le haut.

Avantageusement, la feuille de verre peut être positionnée horizontalement sur un support, ce qui permettra de déplacer facilement la feuille de verre au cours des étapes du procédé de l'invention. Ce support peut comprendre un cadre, notamment métallique, et une pluralité de rouleaux disposés dans la largeur du cadre et sur toute sa longueur, lesdits rouleaux comportant une pluralité de roues en caoutchouc en saillie et aptes à recevoir la feuille de verre.

Le support selon l'invention peut avantageusement également, au besoin et en fonction des étapes de l'invention, être superposé à d'autres supports selon l'invention, chacun comportant une feuille de verre selon l'invention, dans certaines étapes du procédé telle que les étapes de réticulation b) et e).

De plus, le support selon l'invention peut également être monté sur une table comprenant des pieds (par exemple, quatre ou six pieds), ce qui permet de positionner la feuille de verre à la hauteur voulue et adaptée à l'étape du procédé considérée et/ou de déplacer facilement la feuille de verre sur son support (par exemple, dans ce cas, on peut prévoir que les pieds de la table comportent des roulettes).

Selon un mode de réalisation particulièrement avantageux de l'invention, avant l'étape a), la surface de la feuille de verre est traitée selon les étapes suivantes, dans l'ordre :
- application d'une composition bouche-pores sur essentiellement la totalité de ladite surface,
- séchage,
- application d'une composition de démoulage sur essentiellement la totalité de ladite surface,
- lustrage de ladite surface.

Ce mode de réalisation est avantageux dans la mesure où les étapes qui le constituent permettent l'obtention d'une surface de verre aussi plane que possible avec un « poli miroir», exempte de rayures, de porosités, d'aspérités et de déformations. Cela entraîne que la couche de première résine réticulée qui sera formée sur cette surface lors des étapes b) de dépôt et c) de réticulation et qui constituera la surface externe du panneau stratifié renforcé, sera d'une belle esthétique, brillante, parfaitement lisse et, en conséquence, très facilement nettoyable et avec un caractère bactériostatique indéniable. De plus, cela permet un démoulage facile du panneau stratifié en fin de procédé (étape f).

Selon ce mode de réalisation, l'application de ladite composition bouche-pores peut avantageusement être précédée d'une étape de traitement d'essentiellement la totalité de ladite surface par une ou plusieurs application(s) d'une composition de nettoyage. Ceci est avantageux car cela permet de nettoyer au préalable ladite surface de la feuille de verre en éliminant toute trace d'élément contaminant (graisses, saletés, poussières, etc.). En particulier, la composition de nettoyage est, comme communément utilisé, un solvant ou un mélange de solvants, de préférence sans HAP (hydrocarbures aromatiques polycycliques).

Selon ce mode de réalisation, l'application de ladite composition bouche-pores et/ou l'application de ladite composition de démoulage peut être opérée par pulvérisation, par exemple à l'aide d'un pistolet.

Le lustrage selon ce mode de réalisation peut être opéré manuellement à l'aide d'un tissu de lustrage, par mouvements circulaires, ou bien à l'aide d'un ou plusieurs disques de polissage sur le(s)quel(s) est positionné un tissu de lustrage et animé(s) de mouvements circulaires.

Selon ce mode de réalisation et comme admis dans le domaine technique, par « composition bouche-pores », on entend une composition permettant de colmater les micro-rayures, les micro-pores et les micro-aspérités de la surface du verre. Par exemple, une composition bouche-pores qui peut être utilisée selon l'invention est une colle à base d'hydrocarbones (alcanes et iso-alcanes).

Toujours selon ce mode de réalisation et comme admis dans le domaine technique, par « composition de démoulage », on entend une composition aidant au démoulage du panneau stratifié de la feuille de verre. La composition de démoulage selon l'invention peut être liquide ou sous forme d'une pâte, par exemple une cire.

Toujours selon ce mode de réalisation, les étapes d'application de ladite composition de démoulage suivi du lustrage peuvent avantageusement être répétées au moins deux fois, de préférence, entre 5 et 7 fois, selon la séquence application-lustrage, application-lustrage, etc.

Selon ce mode de réalisation, ce traitement de la surface de la feuille de verre ne doit pas nécessairement être effectué avant chaque étapes a)- b) selon l'invention mais, selon ce mode de réalisation, toute feuille de verre utilisée dans le procédé de l'invention doit l'avoir subi au préalable au moins une fois. En pratique, avant toute utilisation dans le procédé de l'invention, la feuille de verre est traitée une fois selon ce mode de réalisation et, ensuite, après plusieurs utilisations, elle peut subir avantageusement et en tant que traitement d'entretien, un nouveau cycle de traitement, total ou partiel, par exemple une ou plusieurs séquence(s) « application d'une composition liquide de lustrage-lustrage ».

Selon l'invention et tel qu'illustré à la figure 1, le procédé comprend en outre, après l'étape a) de fourniture d'une feuille de verre, une étape b) de dépôt d'une couche d'une première résine réticulable liquide sur la surface de la feuille, ladite première résine étant choisie parmi les résines polyesters isophtaliques, les résines polyesters orthophtaliques, les résines polyesters vinyliques (ou vinylesters) et leurs mélanges. Ceci est avantageux car ces composants adressent bien les normes xxx et car ils confèrent à la couche, une fois réticulée, des bonnes propriétés de résistance mécanique. De préférence, ladite première résine est une résine du type polyester isophtalique.

Avantageusement, ladite première résine est une résine homologuée pour le contact alimentaire.

Le dépôt de la couche selon l'invention peut être effectué par différentes techniques. Selon un mode de réalisation de l'invention, la couche peut être déposée par pulvérisation ou projection, par exemple, au moyen de pulvérisateurs en mouvement au-dessus de la surface de la feuille de verre. Néanmoins, cette méthode de pulvérisation n'est pas préférée notamment car elle génère beaucoup d'émanations (notamment de COV) et de poussières dans le local de production et beaucoup de pertes de matières.

Alternativement, la feuille de verre peut être déplacée sous les pulvérisateurs (par exemple, un portique) ou bien être déplacée sous un applicateur, par exemple, un applicateur à rideau.

Alternativement également, le dépôt de la couche selon l'invention peut être effectué manuellement grâce à un rouleau.

Selon un mode de réalisation préféré, le dépôt de la couche selon l'invention est effectué par une machine de dépose automatique, dans laquelle la feuille de verre se déplace, notamment sur un support selon l'invention.

Selon l'invention et tel qu'illustré à la figure 1, le procédé comprend en outre, après l'étape b) de dépôt, une étape c) de réticulation de la première résine.

Selon l'invention, la réticulation de la première résine permet par exemple d'obtenir les propriétés suivantes à la surface de ladite résine réticulée :
- Résistance à la compression : 140 à 210 MPa, et/ou
- Module de Young : 20 à 30 GPa, et/ou
- Dureté Vickers : 15 à 20 HV.

Selon l'invention, la réticulation de la première résine peut être opérée par UV ou par chauffage ou par induction, de préférence par chauffage.

Selon un mode de réalisation préféré, la réticulation de la première résine est opérée en disposant la feuille de verre recouverte dans un dispositif de réticulation comportant des moyens de réticulation, notamment des moyens de chauffage. Par exemple, le dispositif de réticulation peut avantageusement être une enceinte sous flux d'air chauffé à une température entre 35 et 50°C. Ceci est avantageux dans la mesure où ce dernier dispositif permet (i) d'accélérer le processus de réticulation et de permettre dès lors une température dans l'enceinte plus faible (ce qui est favorable) et (ii) d'évacuer facilement les émissions (notamment de COV) générées lors de la réticulation/le séchage de la résine liquide. Selon ce mode de réalisation, l'enceinte sous flux d'air comporte une entrée de gaz (air chaud) et une sortie/aspiration de gaz (air accompagné des émissions provenant de la réticulation/du séchage de la résine liquide).

Avantageusement, l'étape b) de réticulation peut être menée sur plusieurs feuilles de verre de manière simultanée. Par exemple, à cet effet, plusieurs feuilles de verre recouvertes de la première résine réticulable liquide et positionnées sur un support selon l'invention, sont superposées dans le dispositif de réticulation notamment dans l'enceinte selon l'invention.

Selon un mode de réalisation de l'invention, la couche de première résine a une épaisseur après l'étape de réticulation (ou épaisseur « sèche ») comprise entre 200 et 900 microns et, de préférence, entre 400 et 800 microns.

La combinaison de la chimie de la première résine et de sa réticulation « directe », c'est-à-dire avant l'étape suivante d'application du tissé de verre imprégné, a pour avantage de fournir une couche, qui fera office de surface externe, mécaniquement très résistante, très étanche/imperméable, et dont l'intégrité chimique et mécanique est préservée au maximum en vue des étapes ultérieures du procédé. Grâce à la réticulation directe, la couche de première résine n'est pas dégradée ou « diluée » par l'étape suivante d'application du tissé de verre imprégné. En particulier, les propriétés de la couche, notamment respectant les normes alimentaires, ne sont pas altérées par les étapes suivantes.

Selon l'invention et tel qu'illustré à la figure 1, le procédé comprend en outre, après l'étape c) de réticulation de la première résine, une étape d) d'application, sur la couche de première résine réticulée, d'un tissé de verre imprégné d'une deuxième résine réticulable liquide.

Toujours selon l'invention, la deuxième résine est choisie parmi les résines polysters.

Selon l'invention, le tissé de verre imprégné peut être fourni dans le procédé tel quel (on parle alors de tissé de verre « pré-imprégné ») ou bien, dans un mode de réalisation avantageux de l'invention, il peut être préparé/obtenu au préalable de l'application, dans un procédé continu.

Ainsi, selon un mode de réalisation préféré de l'invention, après l'étape c) et avant l'étape d), le tissé de verre imprégné est préparé selon les étapes suivantes, dans l'ordre :
- fourniture du tissé de verre, notamment sous forme d'un rouleau,
- entrainement du tissé de verre vers un bain de la deuxième résine réticulable liquide,
- immersion du tissé de verre dans ledit bain, permettant son imprégnation,
- entrainement du tissé de verre imprégné hors dudit bain, et
- essorage du tissé imprégné, permettant d'éliminer le surplus de résine.

De manière avantageuse selon l'invention, la préparation du tissé de verre imprégné et l'application dudit tissé peut se faire de manière continue. Par exemple, le tissé de verre sous forme d'un rouleau est déroulé, grâce à un rouleau d'entraînement, vers le bain de résine. Le tissé est alors immergé dans ledit bain et s'imprègne de ladite résine. Le bain de résine est avantageusement alimenté en résine par une pompe, soit en continu soit à la demande en fonction du niveau de résine dans le bain. Après immersion/imprégnation, le tissé est entraîné hors du bain et est essoré, par exemple, grâce à son passage entre deux rouleaux d'essorage. Finalement, le tissé de verre imprégné est appliqué sur la couche de première résine réticulée.

Selon un mode de réalisation particulier, la vitesse d'entrainement du tissé de verre vers le bain, notamment par un rouleau d'entraînement, est de 0,5 à 1,5 mètres par seconde.

Selon un autre mode de réalisation particulier, le tissé de verre est défini par une densité comprise entre 300 et 1000 g/m², de préférence entre 400 et 800 g/m². Le densité du tissé de verre selon l'invention s'entend comme la densité du tissé de verre non-imprégné ou avant son imprégnation.

Selon encore un autre mode de réalisation particulier, le procédé comprend en outre une étape de débullage du tissé imprégné après ou au moment de son application à l'étape d) et avant l'étape e) de réticulation.

Avantageusement, l'étape de débullage est réalisée au moment de l'application du tissé de verre imprégné sur la couche, par exemple grâce à au moins un rouleau de débullage disposé au-dessus de la couche réticulée, perpendiculairement à la longueur de la feuille de verre et à une distance telle de la surface de la couche qu'une pression appropriée est générée lors du passage du tissé imprégné, permettant ainsi le débullage. De bons résultats ont été obtenus grâce à deux rouleaux de débullage parallèles l'un à l'autre à une distance appropriée, par exemple entre 10 et 50 cm, préférentiellement entre 20 et 40 cm. De plus, le(s) rouleau(x) de débullage peuvent avantageusement comporter une structure à leur surface, par exemple des stries, afin d'améliorer leur adhérence sur le tissé imprégné de résine liquide et éviter qu'ils glissent à la surface du tissé.

L'étape d) d'application du tissé de verre imprégné peut être opéré sur la feuille de verre recouverte de résine réticulée qui est fixe alors que le dispositif utilisé pour l'application du tissé est mobile, se déplaçant dans la longueur de la feuille. Alternativement, l'étape d) d'application du tissé de verre imprégné peut être opérée sur la feuille de verre recouverte de résine réticulée qui est mobile, alors que le dispositif utilisé pour l'application du tissé est fixe.

Selon l'invention et tel qu'illustré à la figure 1, le procédé comprend en outre, après l'étape d) d'application du tissé imprégné d'une deuxième résine réticulable liquide, une étape e) de réticulation de ladite deuxième résine.

Selon l'invention, la réticulation de la deuxième résine permet par exemple d'obtenir les propriétés suivantes à la surface de ladite résine réticulée :
- Résistance à la compression : 140 à 210 MPa, et/ou
- Module de Young : 20 à 30 GPa, et/ou
- Dureté Vickers : 15 à 20 HV.

Selon l'invention, la réticulation de la deuxième résine peut être opérée par UV ou par chauffage ou par induction, de préférence par chauffage.

Avantageusement, la première résine et la deuxième résine sont réticulées par la même méthode, afin d'utiliser avantageusement le même dispositif de réticulation (même si les réglages/paramétrages peuvent être adaptés de l'une à l'autre).

Selon un mode de réalisation préféré, la réticulation de la deuxième résine est opérée en disposant la feuille de verre recouverte de la couche et du tissé imprégné dans un dispositif de réticulation comportant des moyens de réticulation, notamment des moyens de chauffage. Par exemple, le dispositif de réticulation peut avantageusement être une enceinte sous flux d'air chauffé à une température entre 35 et 50°C. Ceci est avantageux dans la mesure où ce dispositif permet (i) d'accélérer le processus de réticulation et de permettre dès lors une température dans l'enceinte plus faible (ce qui est favorable) et (ii) d'évacuer facilement les émissions (notamment de COV) générées lors de la réticulation/le séchage de la deuxième résine liquide. Selon ce mode de réalisation, l'enceinte sous flux d'air comporte une entrée de gaz (air chaud) et une sortie/aspiration de gaz (air accompagné des émissions provenant de la réticulation/du séchage de la résine liquide).

Avantageusement, la première résine et la deuxième résine sont réticulées en utilisant une enceinte sous flux d'air chauffé à une température entre 35 et 50°C.

Avantageusement également, l'étape e) de réticulation peut être menée sur plusieurs feuilles de verre de manière simultanée. Par exemple, à cet effet, plusieurs feuilles de verre, recouvertes de la couche réticulée et du tissé imprégné et positionnées sur un support selon l'invention, sont superposées dans le dispositif de réticulation notamment dans l'enceinte selon l'invention.

Selon l'invention et tel qu'illustré à la figure 1, le procédé comprend en outre, après l'étape e) de réticulation de ladite deuxième résine, une étape f) de démoulage du panneau stratifié obtenu.

Selon un mode de réalisation, après l'étape f) de démoulage, le procédé comprend une étape de découpe du panneau pour le mettre à la taille voulue et/ou pour déligner ses bords.

Selon un mode de réalisation de l'invention, le panneau stratifié renforcé, obtenu après l'étape f), a une épaisseur entre 1 et 5 mm, de préférence entre 1,5 et 4 mm. De plus, il présente une longueur qui avantageusement peut aller de 3 mètres à 6 mètres.

Le procédé de l'invention est également avantageux dans la mesure où il permet de fabriquer des panneaux stratifiés renforcés dont la longueur peut aller jusqu'à 6 mètres. Ceci permet d'éviter au maximum la présence de joints lors du recouvrement de surfaces comme des murs ou des plafonds, rendant la pose plus aisée et surtout diminuant les zones plus difficiles à nettoyer et où la saleté/les bactéries se logent plus facilement.

Finalement, l'invention concerne également un panneau stratifié renforcé, obtenu par le procédé selon l'invention et dans ses différents modes de réalisation décrits ci-avant.

Le panneau stratifié obtenu selon le procédé de l'invention peut être utilisé pour de nombreuses applications et s'adapte à toutes les configurations possibles et tous les supports : carrelage, béton, panneaux sandwich, peintures, parpaings, ...

Il est bien entendu que la présente invention n'est en aucune façon limitée aux formes de réalisations décrites ci-dessus et que des modifications peuvent y être apportées sans sortir du cadre des revendications. Il est en outre entendu que l'invention englobe également toutes les combinaisons possibles de caractéristiques et de caractéristiques préférées, décrites ici et citées dans les revendications.

De plus, l'exemple suivant est fourni à des fins d'illustration et n'est pas destiné à limiter la portée de la présente invention.

### Exemple

Une feuille de verre de 1,30 m sur 6,20 m et de 8 mm d'épaisseur a tout d'abord été traitée comme suit :
Elle a été nettoyée manuellement à l'aide d'une solution de décapage de référence Chemlease mold Cleaner et d'un chiffon. Ensuite, une composition de référence Chem Trend/Chemlease Sealer 2697 a été appliquée sur toute sa surface à l'aide d'un pistolet de pulvérisateur et la feuille de verre a été séchée à l'air. Ensuite, une composition de référence Chemlease One *FS EZ* a été appliquée sur toute la surface de la feuille de verre à l'aide d'un pistolet de pulvérisateur et un lustrage a été effectué à l'aide d'une lustreuse à main, équipée d'un disque de lustrage (bonnet en cachemire pour lustreuse). Cette opération application-lustrage a été répétée 6 fois.

La feuille de verre ainsi traitée a été déposée sur un support comportant un cadre métallique et une pluralité de rouleaux disposés dans la largeur du cadre et sur toute sa longueur, chacun de rouleau comportant une pluralité de roues en caoutchouc en saillie sur lesquels vient se poser la feuille de verre. Le support est lui-même monté sur une table comprenant quatre pieds fixes.

Une résine du type polyster isophtalique alimentaire a ensuite été déposée à l'aide d'une machine du type « Smart Coater».

Ces opérations précédentes ont été répétées sur 6 feuilles de verre.

La résine a ensuite été réticulée en superposant les 6 feuilles de verre sur leur support respectif dans une enceinte sous flux d'air chaud porté à 45°C, durant environ 20 minutes.

L'épaisseur de la couche réticulée était d'environ 600 microns.

Chaque support portant sa feuille de verre recouvert de la couche de résine réticulée a ensuite été replacé sur la table.

Un tissé de verre imprégné d'une résine du type polyester a ensuite été déposé sur la couche à l'aide d'un dispositif se déplaçant sur deux rails disposés de part et d'autre de la feuille de la table en suivant la longueur de la feuille de verre. En particulier, le tissé de verre sous forme d'un rouleau de 125 cm de large a été déroulé, grâce à un rouleau d'entraînement, vers un bain/bac rempli de la résine. Le tissé a alors été immergé dans le bain où il a été imprégné. Le bain de résine est ré-alimenté en résine par une pompe en continu. Le tissé a ensuite été entraîné hors du bain et essoré, grâce à son passage entre deux rouleaux d'essorage. Finalement, le tissé de verre a été déposé sur la couche de résine réticulée. Au moment de son dépôt, il a subi un débullage grâce à deux rouleaux parallèles disposés à 30 cm l'un de l'autre et comportant des stries à leur surface, lesdits rouleaux étant disposés à une distance appropriée de la surface de la couche de manière a appliqué une pression sur le tissé de verre déposé.

Le tissé de verre utilisé était de référence « Stitch Mat Reinforcements ECR Glass », avec un densité 498 g/m².

Ensuite, la résine a été réticulée en superposant de nouveau 6 feuilles de verre sur leur support respectif dans une enceinte sous flux d'air chaud porté à 45°C, durant environ 45minutes.

Finalement, chaque stratifié obtenu (couche de résine+tissé de verre) a été démoulé de la feuille de verre et leurs bords ont été délignés.

## Revendications

1. Procédé de fabrication d'un panneau stratifié renforcé comprenant les étapes suivantes, dans l'ordre :
a) fourniture d'une feuille de verre ayant une surface sensiblement plane et lisse,
b) dépôt d'une couche d'une première résine réticulable liquide sur ladite surface de la feuille de verre, ladite résine étant choisie parmi les résines polyesters isophtaliques, les résines polyesters orthophtaliques, les résines polysters vinyliques (ou vinylesters) et leurs mélanges,
c) réticulation de ladite première résine,
d) application, sur ladite couche, d'un tissé de verre imprégné d'une deuxième résine réticulable liquide,
e) réticulation de ladite deuxième résine,
f) démoulage du panneau stratifié obtenu.

2. Procédé selon la revendication 1, **caractérisée en ce que**, après l'étape c) et avant l'étape d), le tissé de verre imprégné est préparé selon les étapes suivantes, dans l'ordre :
- fourniture du tissé de verre, notamment sous forme d'un rouleau,
- entrainement du tissé de verre vers un bain de ladite deuxième résine réticulable liquide,
- immersion du tissé de verre dans ledit bain,
- entrainement du tissé de verre imprégné hors dudit bain, et
- essorage du tissé imprégné.

3. Procédé selon l'une des revendication précédentes, **caractérisé en ce que** le tissé de verre est défini par une densité comprise entre 300 et 1000 g/m², de préférence entre 400 et 800 g/m².

4. Procédé selon l'une des revendication précédentes, **caractérisé en ce que** le procédé comprend une étape de débullage du tissé imprégné après ou au moment de son application à l'étape d) et avant l'étape e) de réticulation.

5. Procédé selon l'une des revendications précédentes, **caractérisé en ce que** ladite première résine est une résine du type polyester isophtalique.

6. Procédé selon l'une des revendications précédentes, **caractérisé en ce que** ladite deuxième résine est choisie parmi les résines polyesters.

7. Procédé selon l'une des revendications précédentes, **caractérisé en ce que**, avant l'étape a), ladite surface de la feuille de verre est traitée selon les étapes suivantes, dans l'ordre :
- application d'une composition bouche-pores sur essentiellement la totalité de ladite surface,
- séchage,
- application d'une composition de démoulage sur essentiellement la totalité de ladite surface,
- lustrage de ladite surface.

8. Procédé selon l'une des revendications précédentes, **caractérisé en ce que** la réticulation de l'étape c) et/ou (e) est opérée par UV ou par chauffage ou par induction.

9. Procédé selon l'une des revendications précédentes, **caractérisé en ce que** la réticulation de l'étape c) et/ou (e) est opérée en disposant ladite feuille de verre dans un dispositif de réticulation comportant des moyens de réticulation, notamment des moyens de chauffage.

10. Procédé selon la revendication précédente, **caractérisé en ce que** ledit dispositif de réticulation est une enceinte sous flux d'air chauffé à une température entre 35 et 50°C.

11. Procédé selon l'une des revendications précédentes, **caractérisé en ce que**, après l'étape f) de démoulage, le procédé comprend une étape de découpe du panneau pour le mettre à la taille voulue et/ou pour déligner ses bords.

12. Procédé selon l'une des revendications précédentes, **caractérisé en ce que** la couche de première résine a une épaisseur après l'étape c) de réticulation, comprise entre 200 et 900 microns.

13. Panneau stratifié renforcé, **caractérisé en ce qu'**il est obtenu par le procédé selon l'une des revendications 1 à 12.
